(19) Europäisches Patentamt
European Patent Office
Office européen des brevets

(11) Veröffentlichungsnummer: **0 019 588**
**B1**

(12) **EUROPÄISCHE PATENTSCHRIFT**

(45) Veröffentlichungstag der Patentschrift: **30.05.84**

(51) Int. Cl.³: **C 09 B 57/04**

(21) Anmeldenummer: **80810154.7**

(22) Anmeldetag: **08.05.80**

# (54) Verfahren zum Pigmentieren von Lacken aus hochmolekularem organischem Material mittels eines Pigmentes der Isoindolinreihe.

(30) Priorität: **14.05.79 CH 4467/79**

(43) Veröffentlichungstag der Anmeldung: **26.11.80 Patentblatt 80/24**

(45) Bekanntmachung des Hinweises auf die Patenterteilung: **30.05.84 Patentblatt 84/22**

(84) Benannte Vertragsstaaten: **CH DE FR GB IT LI NL SE**

(56) Entgegenhaltungen:
**FR - A - 1 537 299**
**FR - A - 2 107 064**
**FR - A - 2 307 008**
**FR - A - 2 386 588**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Postfach, CH-4002 Basel (CH)**

(72) Erfinder: **Von der Crone, Jost, Dr., Rheintalweg 90, CH-4125 Riehen (CH)**

EP 0 019 588 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Es wurde gefunden, dass man in Lacken aus hochmolekularem organischem Material gelbe bis rote Färbungen von hervorragender Licht- und Wetterechtheit erhält, wenn man als Pigmente Verbindungen der Formel

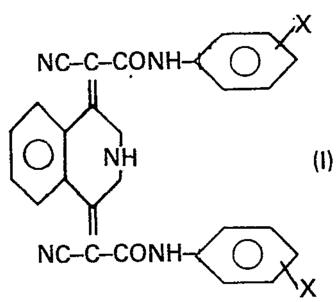

(I)

verwendet, worin X ein sich in m- und p-Stellung befindliches Fluor-, Chlor- oder Bromatom, insbesondere aber ein Chloratom in p-Stellung bedeutet.

Die Verbindungen der Formel I können nach bekanntem einstufigem Verfahren erhalten werden durch Kondensation von 1 Mol 1,3-Diiminoisoindolin mit 2 Mol eines Cyanessigsäure-halogen-anilides.

Die Pigmente der Formel (I) können in verschiedenen Kristallmodifikationen vorliegen. Die Umwandlung geschieht z.B. durch Nachbehandlung mit hochsiedenden Lösungsmitteln bei Temperaturen von 80 – 200°. Als Lösungsmittel kommen z.B. Dimethylformamid, Dimethylacetamid, Dimethylsulfoxyd, N-Methylpyrrolidon, o-Dichlorbenzol, Trichlorbenzol oder Nitrobenzol in Frage.

Als Lacke seien insbesondere solche auf Basis von Alkyd-Melamin-Formaldehyd, Alkyd-Harnstoff-harzen sowie thermoplastischer und thermohärtender Acrylharze, Epoxyharzlacke, Isocyanatlacke oder mit Isocyanaten modifizierte Acrylharzlacke erwähnt. Dank ihrer hohen Licht- und Wetterechtheit eignen sich die erfindungsgemässen Pigmente hervorragend für Metallisé-Lacke.

Die Verbindungen der Formel I fallen nach dem in der DE-OS 2.615.394 beschriebenem Verfahren in einer grobkristallinen Form an, die für die Verwendung als Pigment ungünstig ist, da sie farbschwache Färbungen ergibt und im Lack ungenügende Glanzabgabe zeigt. Es ist daher vorteilhaft, die Rohprodukte durch Mahlen oder Kneten in eine feindisperse Form überzuführen. Dabei werden zweckmässig Mahlhilfsmittel, wie anorganische und/oder organische Salze in Gegenwart oder Abwesenheit organischer Lösungsmittel verwendet. Eine vorteilhafte Methode zur Erreichung der optimalen Pigmentform ist die wässrige Mahlung des Rohpigmentes in schnell-laufenden Rührwerksmühlen mit Mahlkörpern. Als Mahlkörper kommen Quarzsand oder Kugeln aus Glas oder Keramik in Frage. Es können diskontinuierliche wie auch kontinuierliche Mühlen eingesetzt werden. Nach dem Mahlen werden Hilfsmittel wie üblich entfernt, lösliche anorganische Salze z.B. mit Wasser und wasserunlösliche organische Hilfsmittel beispielsweise durch Wasserdampfdestillation.

Die Pigmente weisen vorzugsweise eine spezifische Oberfläche von mindestens $10 m^2$ pro Gramm auf.

Jene Verbindung der Formel I, worin X ein Chloratom in p-Stellung bedeutet, wird in der DE-OS 2,615,394 beschrieben sowie deren Einsatz als löslicher Farbstoff zum Färben linearer Polyester in der Schmelze. Die erhaltenen Polyesterfasern sind gelb gefärbt und zeigen nach 1000 Stunden eine Lichtechtheit von 7. Im Hinblick auf die keineswegs hervorragende Lichtechtheit der gelben Färbungen der Verbindungen der Formel I in Polyester, ist es überraschend, dass die gleiche Verbindung in der Pigmentform scharlachrote Färbungen von extrem hoher Wetterechtheit ergibt.

Die FR-A 2107046 beansprucht die Verwendung einer breiten Klasse von Bis-methinindolinen als Pigmentfarbstoffe. Aus diesem Bereich stellt das beanspruchte Verfahren eine sowohl bezüglich Pigment als auch bezüglich Anwendungsmedium enge Auswahl dar, die zu gefärbten Lacken führt, die sich durch hervorragende Überlackierechtheiten und höchste Wetterechtheiten auszeichnen. Jene der erfindungsgemässen Verbindungen, die p-ständiges Chlor enthalten, werden zwar auf S. 3, Zeilen 14 und 15 der FR-A beschrieben, jedoch ohne Angabe einer spezifischen Verwendung. Auch die Herstellung gefärbter Lacke wird in der FR-A beschrieben, als Pigmente werden jedoch solche verwendet, die von den erfindungsgemässen entweder strukturell stark abweichen oder nur eine mittelmässige Wetterechtheit aufweisen.

In den nachfolgenden Beispielen bedeuten die Teile Gewichtsteile, die Prozente Gewichtsprozente und die Temperaturen sind in Celsiusgraden angegeben.

Beispiel 1

11,6 g Diiminoisoindolin und 23,4 g Cyanessigsäure-4'-chloranilid werden in 300 ml o-Dichlorbenzol unter Rühren auf 100° erwärmt. Nach 1 Stunde gibt man 120 ml Essigsäure hinzu und erwärmt am Rückfluss. Nach 5 Stunden lässt man das Reaktionsgemisch auf 100° abkühlen, saugt das gebildete Pigment ab und wäscht mit Methanol und Wasser. Nach dem Trocknen erhält man 20,2 g grobkristallines, scharlachrot gefärbtes Pulver.

Analyse für $C_{26}H_{15}Cl_2N_5O_2$:

| | | | | |
|---|---|---|---|---|
| ber. | C 62.4 | H 3.02 | N 14.0 | Cl 14.17 |
| gef. | C 62.2 | H 3.1 | N 14.2 | Cl 14.1 |

Für die Verwendung als Pigment wird das Rohprodukt vorteilhaft durch Mahlen oder Kneten in eine feindisperse Form übergeführt. Nach der Einarbeitung in Lacke erhält man farbstarke, scharlachrote Färbungen mit gutem Glanz, hoher Farbtonsättigung und hohen Echtheiten, insbesondere hervorragender Licht- und Wetterechtheit.

In der nachfolgenden Tabelle sind weiter Pigmente beschrieben, die man erhält, wenn man

nach den Angaben des Beispiels 1 das Cyanessigsäure-4'-chloranilid durch äquivalente Mengen der Verbindungen der Formel

$CNCH_2CONHR$

ersetzt, wobei R die in Kolonne 2 angegebene Bedeutung hat. Die Pigmente zeichnen sich durch hohe Farbstärken und gute Licht- und Wetterechtheiten aus.

Tabelle

| Beispiel Nr. | R | Farbton in Lacken |
|---|---|---|
| 2 | 4-Bromphenyl | orange |
| 3 | 3-Fluorphenyl | gelb |
| 4 | 3-Chlorphenyl | gelb |

Beispiel 5

Das nach Beispiel 2 hergestellte Pigment wird in der 20 fachen Menge Dimethylformamid kurz auf Rückflusstemperatur erhitzt. Nach dem Abkühlen saugt man das kristalline Produkt ab. Der Vergleich mit dem ursprünglichen Pigment zeigt, dass durch die Nachbehandlung eine neue Kristallmodifikation entstanden ist.

Nach der Einarbeitung des gemahlenen Pigmentes in Lacke erhält man farbstarke, scharlachrote Färbungen mit guten Echtheiten. Der Farbton der neuen Modifikation ist deutlich bathochromer als der des Pigments nach Beispiel 2.

Beispiel 6

Zu einer Suspension von 2,8 g Phthalonitril in 40 ml Methanol werden 3,9 g einer 30%igen methanolischen Lösung von Natriummethylat zugetropft. Man rührt 1 1/2 Stunden bei Raumtemperatur, wobei Lösung eintritt. Anschliessend wird mit 5 ml Ameisensäure sauer gestellt und 3,9 g Cyanessigsäure-4'-chloranilid und 80 ml o-Dichlorbenzol zugegeben. Es wird unter Abdestillieren des Methanols auf 110° erhitzt. Nach 1 Stunde gibt man 15 ml Ameisensäure und 3,9 g Cyanessigsäure-4'-chloranilid zu. Das Reaktionsgemisch wird nun auf Rückflusstemperatur erwärmt. Nach 3 Stunden lässt man auf 100° abkühlen, saugt das Pigment ab, wäscht mit Methanol, Aceton und Wasser und trocknet. Man erhält so 6,7 g scharlachrotes Farbpulver, das nach dem Mahlen die gleichen Eigenschaften zeigt, wie das in Beispiel 1 beschriebene Pigment.

Beispiel 7

24,5 g eines unveresterten Epoxyharzes, 10,5 g eines ölreaktiven Alkylphenolharzes, 35 g Xylol und 30 g Diacetonalkohol werden zu einem Lack verarbeitet und mit 4 g des nach Beispiel 1 hergestellten Pigmentes in einer Kugelmühle 24 Stunden gemahlen. Nach dem Spritzen auf Aluminiumfolien und Einbrennen auf 120° werden scharlachrote Überzüge von sehr guter Hitze-, Überlackier-, Wetter- und Lichtechtheit erhalten.

Beispiel 8 (Acrylharz-Einbrennlack)

4 Teile des fein verteilten Pigments gemäss Beispiel 1 werden in 20 Teilen Lösungsmittel der folgenden Zusammensetzung eingerührt: 50 Teile Solvesso 150 (Gemisch aromatischer Kohlenstoffe), 15 Teile Butylacetat, 5 Teile Exkin II (Verlaufmittel auf Ketoximbasis), 25 Teile Methyl-Isobutylketon und 5 Teile Silikonöl (1% in Solvesso 150). Nachdem die vollständige Feinverteilung erreicht ist (je nach Art des Rührers in ca. 15–60 Minuten), werden die Bindemittel zugesetzt, nämlich 48,3 Teile Baycryl L 530 (Acrylharz) (51% in Xylol/Butanol 3:1) und 23,7 Teile Maprenal TTX (Melaminharz)(55% in Butanol). Nach kurzem Homogenisieren wird der Lack nach üblichen Methoden wie Spritzen und Tauchen oder speziell zur Kontinuierlichen Beschichtung von Metallblechen im «Coil-Coating»-Verfahren appliziert und eingebrannt (Einbrennen 30 Min., 130°). Die erhaltenen scharlachroten Lackierungen zeichnen sich aus durch sehr guten Verlauf, hohen Glanz und ausgezeichnete Feinverteilung des Pigmentes, sowie durch ausgezeichnete Wetterechtheiten. Die Färbung ist nach 2000 Stunden Bewitterung im Weatherometer unverändert.

Beispiel 9

4 g des nach Beispiel 1 erhaltenen Pigments, 35 g einer 60%igen Lösung eines mit Harnstoff-Formaldehyd modifizierten Alkydharzes in Xylol-Butanol 1:1, 10 g Terpentinöl und 5 g Xylol werden 48 Stunden in einer Kugelmühle gemahlen. Nach dem Spritzen des entstandenen gefärbten Lackes auf eine Aluminiumfolie und Einbrennen bei 120° erhält man einen scharlachroten Überzug von sehr guter Licht-, Wetter-, Hitze- und Überlackierechtheit. Die Färbung ist nach 2000 Stunden Bewitterung im Weatherometer unverändert.

Beispiel 10

0.5 Teile des gemäss Beispiel 1 erhaltenen Pigments werden zusammen mit 2 Teilen einer 60%igen Aluminiumpaste in Paraffin und Xylol (Handelsname Alcoa 726) in 9.5 Teilen eines Gemisches von Xylol und Toluol 1:1, 1 Teil Methylisobutylketon und 1 Teil Butylacetat eingesumpft, über Nacht gelagert und das Gemisch am folgenden Tag während 2 Stunden gerührt. Anschliessend erfolgt die allmähliche Zugabe von 58 Teilen einer 53%igen Lösung eines fremdvernetzenden wärmehärtbaren Polyacrylates in Xylol/Butanol 3:1 (Handelsname Baycryl L 530 der Bayer AG Leverkusen) und von 28 Teilen 55%iger Lösung eines Melaminharzes in Butanol (Handelsname Maprenal TTX der Cassella Farbwerke AG). Abschliessend wird während 30 Minuten gerührt. Mit dem so hergestellten Lack erhält man nach Spritzen auf Blech und Einbrennen auf 120–130° kupferrote metallische Färbungen von hervorragender Wetterechtheit, die selbst nach 2000 Stunden Bewitterung im Weatherometer praktisch unverändert sind.

Beispiel 11

80 g eines ungesättigten , flüssigen Polyesterharzes, 19,72 g Monostyrol und 0,28 g eines Kobalt-Siccatives, welches 16% Kobalt enthält, werden mit 1 g des nach Beispiel 1 hergestellten Pigmentes und 5 g Titandioxyd (Rutil) 48 Stunden in einer Kugelmühle gemahlen. Kurz vor Verwendung dieses Lackes wird eine Mischung bestehend aus 4,15 g Cumolhydroperoxyd (70%ig), 2,52 g Essigester und 13,33 g Butylacetat zugegeben. Nach dem Abziehen dieser Mischung auf Karton und Trocknen an der Luft erhält man einen orange-farbenen Überzug von sehr guter Licht-, Hitze- und Überlackierechtheit.

**Patentansprüche**

1. Verfahren zum Pigmentieren von Lacken aus hochmolekularem organischem Material, dadurch gekennzeichnet, dass man als Pigment eine Verbindung der Formel

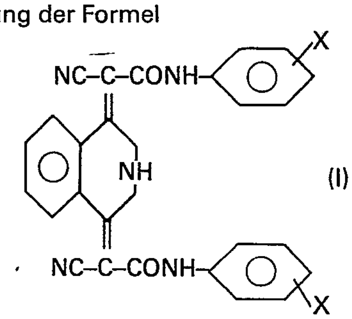

(I)

verwendet, worin X ein sich in m- oder p-Stellung befindliches Fluor-, Chlor- oder Bromatom bedeutet.

2. Verfahren gemäss Anspruch 1, dadurch gekennzeichnet, dass X ein Chloratom in p-Stellung bedeutet.

3. Verfahren gemäss Anspruch 1, dadurch gekennzeichnet, dass man als Lacke Acrylharz-Lacke verwendet.

4. Lacke enthaltend eine Verbindung gemäss Anspruch 1 in Pigmentform.

**Claims**

1. A process for pigmenting lacquers made from organic material of high molecular weight, wherein a compound of the formula

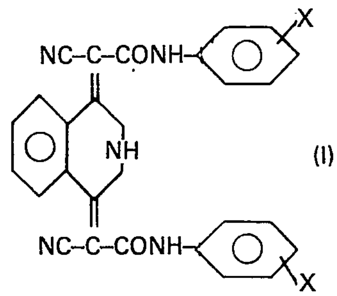

(I)

in which X is a meta- or para-positioned fluorine, chlorine or bromine atom, is used as pigment.

2. A process according to claim 1, wherein X is a para-positioned chlorine atom.

3. A process according to claim 1, wherein the lacquers are acrylic resin lacquers.

4. Lacquers containing a compound according to claim 1 in pigment form.

**Revendications**

1. Procédé de pigmentation de vernis à base de matières organiques macromoléculaires, procédé caractérisé en ce que l'on emploie comme pigment un composé de formule

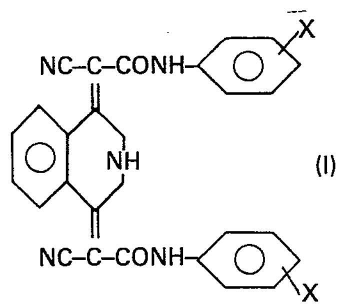

(I)

dans laquelle X représente un atome de fluor, de chlore ou de brome à la position méta ou para.

2. Procédé selon la revendication 1, caractérisé en ce que dans le composé de formule donnée X est un atome de chlore à la position para.

3. Procédé selon la revendication 1 ou 2, caractérisé en ce que l'on pigmente comme vernis des vernis des résines acryliques.

4. Les vernis contenant un composé selon la revendication 1 à l'état pigmentaire.